(19) Europäisches Patentamt
European Patent Office
Office européen des brevets

(11) **EP 3 812 984 A1**

(12) **EUROPEAN PATENT APPLICATION**
published in accordance with Art. 153(4) EPC

(43) Date of publication:
**28.04.2021 Bulletin 2021/17**

(51) Int Cl.:
***G06Q 10/06*** (2012.01)

(21) Application number: **18924211.8**

(22) Date of filing: **25.06.2018**

(86) International application number:
**PCT/JP2018/024041**

(87) International publication number:
**WO 2020/003354 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Forum Engineering Inc.**
**Tokyo, 105-0001 (JP)**

(72) Inventor: **TAKEUCHI, Masahiro**
**Tokyo 105-0001 (JP)**

(74) Representative: **J A Kemp LLP**
**14 South Square**
**Gray's Inn**
**London WC1R 5JJ (GB)**

(54) **DEFICIENT CAPABILITY EXTRACTION DEVICE**

(57) The present disclosure relates to a device for extracting deficient capability information that can be used for recruitment, training, or the like of a human resource, and the purpose thereof is to objectively extract a deficient capability of a target human resource with respect to a required capability. A matching dictionary having a tree structure is stored. A dictionary node required for a human resource in the matching dictionary is registered as a desire node 84. A technical tree 80 is generated by applying the desire node 84 to the tree structure. A dictionary node possessed by a target human resource in the matching dictionary is registered as a possession node 86. A skill tree 82 is generated by applying the possession node 86 to the tree structure. An allocated point based on an importance level and a coefficient based on a distance to the possession node 86 are given (88, 90, 92) to each of the desire nodes 84. A deficiency score for each of the desire nodes 84 is calculated by the following arithmetic operation: allocated point - (allocated point × coefficient). A combination of each of the desire nodes and the deficiency score is outputted as deficient capability information.

Fig. 12

Printed by Jouve, 75001 PARIS (FR)

EP 3 812 984 A1

**Description**

**Technical Field**

The present disclosure relates to a deficient capability extraction device, and more particularly to a deficient capability extraction device suitable as a device for extracting deficient capability information that can be used for recruitment, training or the like of a human resource.

**Background Art**

Patent Document 1 (JP 2003-162651 A) discloses a device for calculating a matching score between a requirement on the side of a job offerer and a skill on the side of a job seeker based on a degree of matching between job offering information and job seeking information. The job offering information is provided by a job offering company that seeks human resources. On the other hand, the job seeking information is provided by a job seeking company that can provide a dispatch a variety of human resources. According to the method described in Patent Document 1, it is possible to appropriately quantify affinity between the requirement of the job offering company and the skill of each job seeker.

**Prior Art Documents**

**Patent Document**

[Patent Document 1] JP 2003-162651 A

**Disclosure of the Invention**

**Problem to be Solved by the Invention**

Now, in an organization such as a company, if the capability of a person in charge is deficient with respect to the capability necessary to carry out his/her work, an activity for supplementing the deficiency is necessary. For example, it is necessary to replenish a human resource to supplement the deficient capability or to train an existing human resource to supplement the deficient capability. As a precondition of such activity, it is necessary to accurately extract the deficient capability.

As described in Patent Document 1 described above, a device that scores a degree of matching between the capability necessary for a job and the capability possessed by a specific human resource is known. However, there has not been conventionally provided a device for accurately extracting a deficient capability with respect to a necessary capability. For this reason, the deficient capability as described above is typically grasped by a person engaged in recruitment or training in a subjective manner.

The present disclosure has been made to solve the problem as described above, and the object thereof is to provide a deficient capability extraction device that can objectively extract the deficient capability of the target human resource with respect to the required capability.

**Means for Solving the Problem**

To achieve the above mentioned purpose, a first aspect of the present disclosure is a deficient capability extraction device, comprising:

a memory unit for storing a matching dictionary which has a tree structure including a plurality of dictionary nodes hierarchized in terms of at least one type of relationship from among a superordinate-subordinate relationship of an article concept, a relationship between a whole and a part of an article, and a superordinate-subordinate relationship of an abstract concept, and in which a matching element is allocated to each dictionary node;
an input interface for receiving an input of a dictionary node to be registered; and
a processing device for extracting deficient capability information based on the matching dictionary and the registered dictionary node; wherein
the processing device performs:

a process of registering a dictionary node in the matching dictionary as a desire node, said dictionary node being required for a human resource;
a process of applying the desire node to the tree structure to generate a technical tree that covers the registered desire node;

a process of registering a dictionary node in the matching dictionary as a possession node, said dictionary node being possessed by a target human resource;

a process of applying the possession node to the tree structure to generate a skill tree that covers the registered possession node; and

a process of generating the deficient capability information based on a result obtained by subtracting a group of the possession nodes included in the skill tree from a group of the desire nodes included in the technical tree.

A second aspect of the present disclosure is the deficient capability extraction device according to the first aspect, wherein

the input interface has a function of receiving an input of an importance level of the desire node, and

the process of extracting the deficient capability information includes:

a process of calculating an allocated point of the desire node such that the higher the importance level of the desire node is, the larger a value of the allocated point is;

a process of setting a coefficient of the desire node such that the shorter a distance of the desire node from the possession node in the tree structure is, the larger a value of the coefficient is;

a process of calculating a sufficiency score of the desire node based on the allocated point and the coefficient;

a process of calculating a deficiency score of the desire node by subtracting the sufficiency score from the allocated point; and

a process of generating, as the deficient capability information, information including a combination of the deficiency score and the desire node corresponding to the deficiency score.

A third aspect of the present disclosure is the deficient capability extraction device according to the second aspect, wherein:

the matching dictionary further includes information indicating at least one type of horizontal relationship from among a horizontal relationship that associates one matching element with another matching element used to handle the one matching element, a horizontal relationship that associates one matching element with another matching element required to handle the one matching element, and a horizontal relationship that associates one matching element with another matching element similar to the one matching element, and

the process of setting the coefficient includes a process of setting a coefficient that corresponds to the horizontal relationship of the desire node when the horizontal relationship is established between the desire node and the possession node.

A fourth aspect of the present disclosure is the deficient capability extraction device according to the second or third aspect, wherein:

the input interface has a function of receiving an input of a mastery level of the possession node, and

the process of calculating the sufficiency score calculates the sufficiency score based on the allocated point, the coefficient, and the mastery level of the possession node related to the coefficient.

A fifth aspect of the present disclosure is the deficient capability extraction device according to any one of the first to fourth aspects, wherein

the group of the desire nodes corresponds to a sum of capabilities required for a specific organization,

the target human resource is each of existing human resources belonging to the organization,

the group of the possession nodes corresponds to a sum of possession nodes of all the existing human resources belonging to the organization, and

the deficient capability information is information that is deficient for the organization.

A sixth aspect of the present disclosure is the deficient capability extraction device according to any one of the first to fourth aspects, wherein

the target human resource is a human resource that is a target of performance evaluation,

the group of the desire nodes corresponds to a sum of individual elements included in evaluation criteria to be applied to the target human resource,

the group of the possession nodes corresponds to a sum of individual elements possessed by the target human resource, and

the deficient capability information is information on a capability that is deficient for the target human resource in light of the evaluation criteria.

**Advantages of the Aspect of the Disclosure**

According to the first aspect of the disclosure, a technical tree that covers elements required for a human resource can be generated by registering all the desire nodes in a matching dictionary. In addition, a skill tree that covers items possessed by a target human resource can be generated by registering all the possession nodes in the matching dictionary. Since the technical tree and the skill tree have exactly the same tree structure, they can be easily compared. Then, by subtracting a group of the possession nodes included in the skill tree from a group of the desire nodes included in the technical tree, it is possible to objectively extract a deficient capability of the target human resource with respect to the required capability.

According to the second aspect of the disclosure, a large coefficient is given to a desire node having a possession node with a short distance in the tree structure. The distance between the desire node and the possession node corresponds to the strength of the relationship between the two. Therefore, in the present disclosure, a large coefficient is given to a desire node in which a possession node with a strong relationship exists. In the present disclosure, as the coefficient approaches 1.0, a sufficiency score approaches an "allocated point". As s a result, a deficiency score approaches zero. On the contrary, as the coefficient approaches 0.0, the deficiency score approaches an "allocated point". As described above, in the present disclosure, while the value of the deficiency score becomes small for a desire node having a possession node with a strong relationship, the value of the deficiency score becomes large for a desire node having no possession node with a strong relationship. In other words, according to the present disclosure, a large deficiency score is calculated for a desire node in which the capability of the target human resource is deficient. On the other hand, the deficiency score of the desire node in which required capability is recognized has a small value. For this reason, according to the present disclosure, it is possible to extract deficient capability information that appropriately represents a gap between the required capability and the capability of the target human resource. Further, in the present disclosure, a high allocated point is given to a desire node having a high importance level. As a result, the deficiency score of the desire node having a high importance level is apt to be a large value. Therefore, according to the present disclosure, it is possible to obtain deficient capability information that also correctly represents the importance level of each desire node.

According to the third aspect of the disclosure, at least one information of a horizontal relationship associated by "use", a horizontal relationship associated by "require", and a horizontal relationship associated by "similar" is provided to the matching dictionary. Matching elements associated by these horizontal relationships can be understood as elements in which one complements the other. For this reason, even when a possession node that matches the desire node does not exist, it is desirable to give a certain sufficiency score to the desire node as long as the possession node indicating a horizontal relationship exists. According to the present disclosure, since the coefficient corresponding to the horizontal relationship is set, the above requirement can be satisfied.

According to the fourth aspect of the disclosure, a mastery level of each possession node is reflected in the sufficiency score. Specifically, the higher the mastery level of the possession node related to the desire node is, the higher the sufficiency score is. In addition, the lower the mastery level thereof is, the smaller the sufficiency score is. In other words, if the high mastery level is obtained for the possession node corresponding to the desire node, the deficiency score becomes low, and if the mastery level thereof is low, the deficiency score becomes high. As described above, according to the present disclosure, by reflecting the mastery level of each possession node, it is possible to generate deficient capability information that correctly represents the actual situation.

According to the fifth aspect of the disclosure, the result obtained by subtracting the sum of the capabilities of the existing human resources of a specific organization from the sum of the capabilities required for the organization is defined as the deficient capability information. In this case, the obtained deficient capability information correctly represents the capability that is deficient for the organization. For this reason, the deficient capability information obtained by the present disclosure can be used as recruitment information in a situation of human resource replenishment. The deficient capability information can also be used as a basis of a training program in a situation of human resource training.

According to the sixth aspect of the disclosure, the result obtained by subtracting the capability of a human resource who is a target for the performance evaluation from the evaluation criteria to be used for the performance evaluation is defined as the deficient capability information. Such deficient capability information correctly represents the capability that is deficient for the target human resource. For this reason, the deficient capability information obtained by the present disclosure can be used as a training program for the target human resource.

**Brief Description of the Drawings**

Fig. 1 is a diagram for describing an overview of a network including a deficient capability extraction device of a first embodiment of the present disclosure;

Fig. 2 is a diagram showing a hardware configuration of the management server shown in Fig. 1;

Fig. 3 is a diagram showing an example of a matching dictionary including a group of matching items, organized in a tree structure according to their skill relevance;

Fig. 4 is a diagram showing a use relationship and a require relationships included in the matching dictionary employed in the present embodiment;

Fig. 5 is a diagram showing a similar relationship included in the matching dictionary employed in the present embodiment;

Fig. 6 is a flowchart for describing a flow for registering desire nodes;

Fig. 7 is a first diagram showing procedures for registering desire nodes;

Fig. 8 is a second diagram showing procedures for registering desire nodes;

Fig. 9 is a third diagram showing procedures for registering desire nodes;

Fig. 10 is a diagram showing a state in which a desire node does not exist in a matching dictionary;

Fig. 11 is a diagram showing procedures for registering the importance of a desire node;

Fig. 12 is a diagram showing how a deficiency score is calculated based on a matching result between a technical tree including desire nodes and a skill tree including possession nodes;

Fig. 13 is a flowchart for describing a flow performed by the management server for outputting deficient capability information in first embodiment of the present discloser; and

Fig. 14 is a flowchart for describing a flow performed by the management server for outputting deficient capability information in second embodiment of the present discloser.

## Description of Embodiments

### First embodiment

[Configuration of first embodiment]

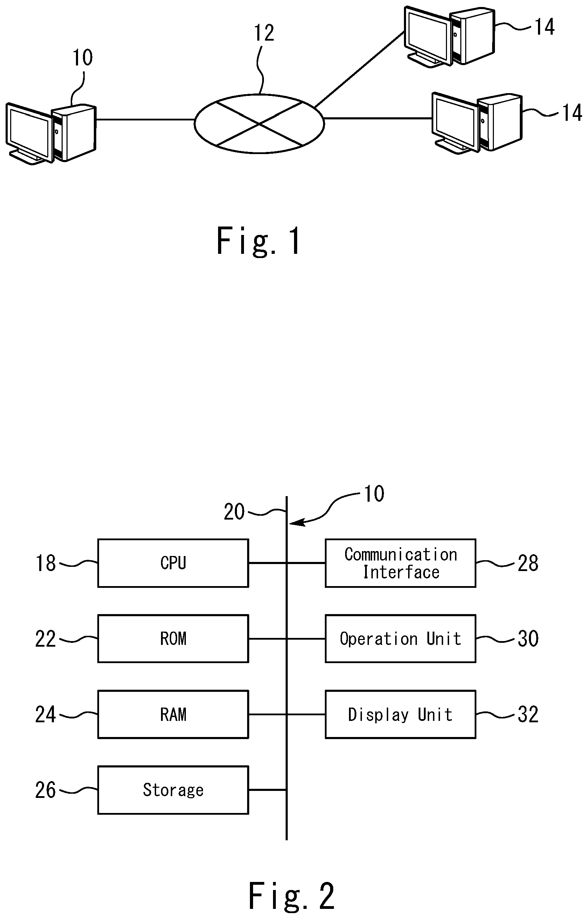

Fig. 1 is a diagram for describing an overview of a network including a deficient capability extraction device of a first embodiment of the present disclosure. The deficient capability extraction device of the present embodiment includes a management server 10.

Fig. 2 shows a hardware configuration of the management server 10. The management server 10 is configured with a general computer system and includes a central processor (CPU) 18. Memory units such as a ROM 22, a RAM 24, and a storage 26 are connected to the CPU 18 via a communication bus 20. A communication interface 28, and an operation unit 30 and a display unit 32 serving as user interfaces are further connected to the communication bus 20. The management server 10 implements a function as a deficient capability extraction device when the CPU 18 executes a program stored in the ROM 22.

The management server 10 is connected to a plurality of operation terminals 14 via a network 12. The device of the present embodiment is designed mainly for the purpose of accurately extracting a capability that is deficient for a specific organization when the specific organization executes a specific project. The operation terminal 14 is used when a person in charge of operation who is proficient in the operation of the present device registers information on the capability necessary for executing the project and the capability of each existing human resource belonging to the organization. The operation terminal 14 is configured with a general computer system as in the management server 10.

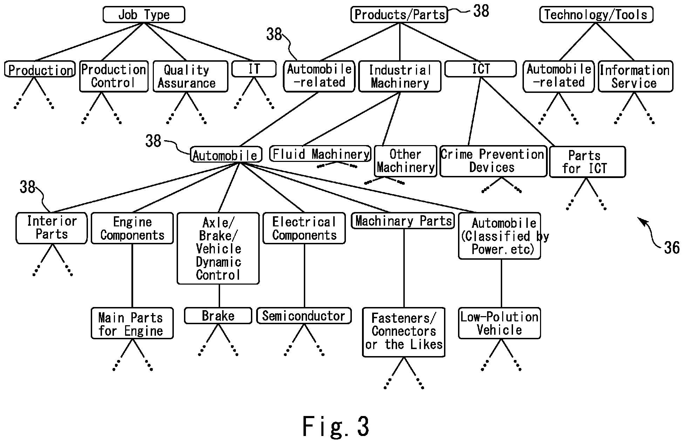

Fig. 3 shows an example of a matching dictionary 36 stored in the management server 10. The matching dictionary 36 includes a plurality of dictionary nodes 38 hierarchized in a tree structure. Each of the dictionary nodes 38 is allocated with a matching element representing the content or the field of the skill. The dictionary nodes associated by the upper and lower relationship lines show a relationship between a superordinate and a subordinate in product categories, a relationship between the whole and a part of a product, or a relationship between a superordinate and a subordinate in abstract concepts.

For example, the dictionary node 38 of "Products/Parts" is associated with several dictionary nodes 38 of products or parts including "Automobile-related". They have a relationship between a superordinate and a subordinate in product categories. In addition, the dictionary node 38 of "Automobile-related" is associated with several dictionary nodes 38 including "Interior Parts". They have a relationship between the whole and a part of a product. Further, the dictionary node 38 of "Job Type" is associated with several dictionary nodes 38 including "Production". They have a relationship between a superordinate and a subordinate in the abstract concept.

The dictionary nodes 38 included in the matching dictionary 36 can be determined to have a stronger association as their distance in the tree structure is shorter. For example, "Engine Components" and "Axle/Brake/Vehicle Dynamic Control", both of which are subordinate to "Automobile", are closely related because they are overlapping in knowledge of automobiles.

On the other hand, some of the dictionary nodes 38 are closely related to each other even if they are located apart from each other in the tree structure. The matching dictionary 36 includes three types of horizontal relationship lines that represent their relationships.

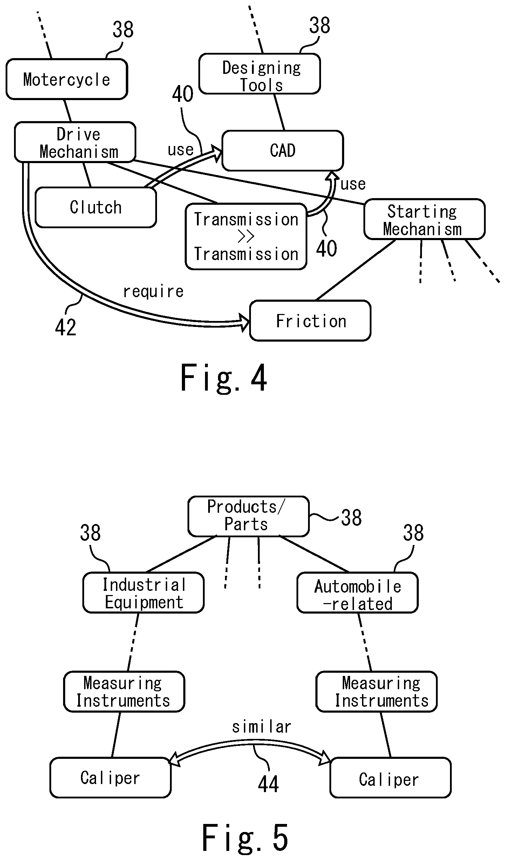

Fig. 4 shows a use relationship line 40 and a require relationship line 42 among the three types of horizontal relationship lines. Of the dictionary nodes 38 shown in Fig. 4, for example, use of a "CAD" is required to handle a "Clutch" in a "Drive Mechanism" of a "Motorcycle". In this manner, when a relationship in which one element uses another element is established, the use relationship line 40 is drawn from the one element to the other element. In addition, academic knowledge of "Friction" is required to handle the "Drive Mechanism" of the "Motorcycle". In this manner, when a relationship in which one element requires another element is established, the require relationship line 42 is drawn from the one element to the other element.

Fig. 5 shows a third horizontal relationship line, that is, a similar relationship line 44. In Fig. 5, a "Caliper" that is subordinate to "Industrial Equipment" and a "Caliper" that is subordinate to "Automobile-related" have substantially the same meaning from a viewpoint of a skill. In this manner, when one element and another element have substantially the same meaning, the similar relationship line 44 is drawn between these elements.

As described above, the matching dictionary 36 of the present embodiment includes three types of horizontal relationship lines 40, 42, and 44 in addition to vertical relationship lines that correspond to the tree structure. As in the dictionary nodes 38 arranged close to each other in the tree structure, the dictionary nodes connected by any one of these horizontal relationship lines 40, 42, and 44 can be considered to have a strong association therebetween.

In the present embodiment, each dictionary node 38 included in the matching dictionary 36 is input by an administrator using the management server 10. At this time, the administrator inputs the dictionary node 38 to be added while specifying a vertical relationship constituting the tree structure, and if necessary, specifying a horizontal relationship.

[Basic Operation of First Embodiment]

Next, an operation of the deficient capability extraction device of the present embodiment will be described.

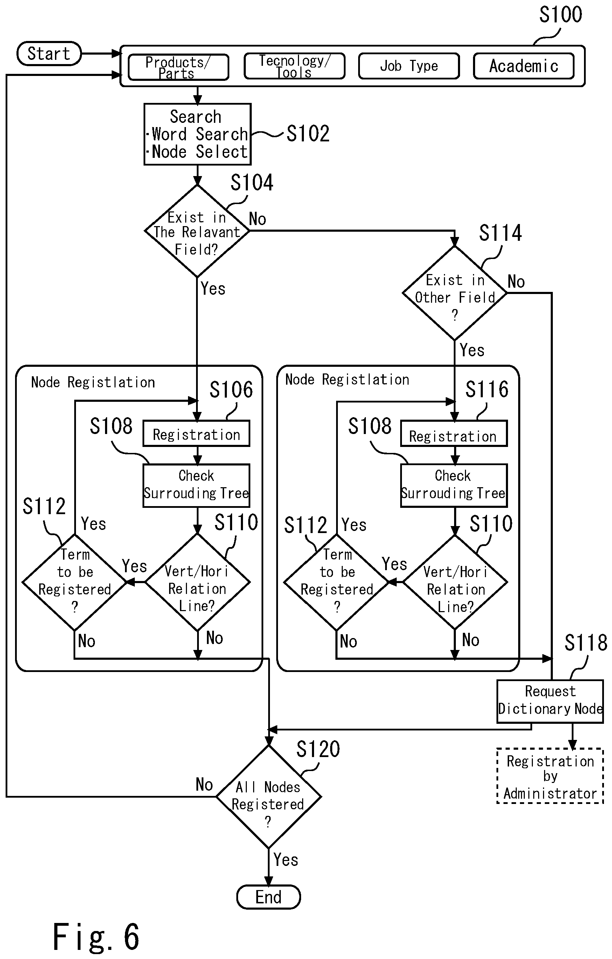

Fig. 6 is a flowchart for describing a flow according to which a person in charge of operation who uses the operation terminal 14 registers a capability condition necessary to execute a certain project. The matching dictionary used in the present embodiment has a tree structure for each of four categories, "Products/Parts", "Technology/Tools", "Job Type", and "Academic". When the capability condition is registered, which one of these four categories is to be registered is first selected.

Hereinafter, a description will be given of an example of a case in which extraction of a deficient capability of an existing organization for a project on " Design of Actuators for Small Outboard Motors " is requested by a company that manufactures parts for ships. Further, in this case, a dictionary node relating to the " Job Type" from among the four categories is first registered (Step 100).

In the present embodiment, as a method of registering the dictionary node, two methods, word search and node selection, are prepared (Step 102). The word search is a method of inputting a specific word and calling a corresponding dictionary node. On the other hand, the node selection is a method of checking a matching dictionary along a tree structure, and selecting and registering a dictionary node necessary for progress of a project.

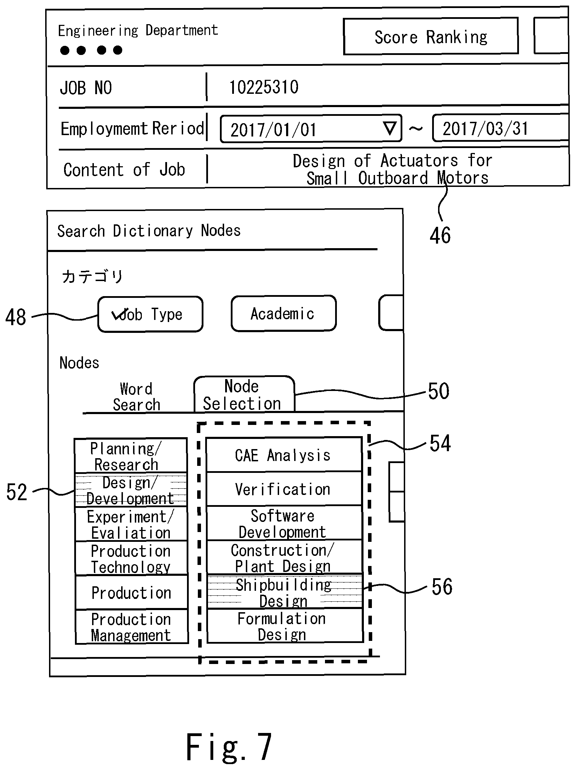

Fig. 7 shows an example of a screen displayed on a monitor of the operation terminal 14 when a dictionary node is registered by the node selection method. Here, " Design of Actuators for Small Outboard Motors" is input by the person in charge of operation as a content of the project (46), that is, the work content. In addition, " Job Type" is selected as the category (48), and a tab of" Node Selection" is selected (50). Further, several job types from " Planning/Research" to "Production Management" are listed below "Job Type", and the dictionary node of "Design/Development" is selected from among them (52).

When "Design/Development" is selected, several dictionary nodes that are subordinate to "Design/Development" are displayed. Here, these dictionary nodes are shown in a frame indicated by a broken line with a reference sign (54). The person in charge of operation shows these dictionary nodes to a requester and prompts the requester to choose the one closest to the capability necessary for the project. Fig. 7 shows a state in which "Shipbuilding Design" is chosen as the closest one and the node thereof is registered (56).

The flowchart shown in Fig. 6 represents the above processing in Step 104 and Step 106. Specifically, the process of searching for a dictionary node that is necessary for the project in the field of "Design/Development" corresponds to Step 104, and the process of registering the dictionary node of "Shipbuilding Design" as a result of it corresponds to Step 106.

In the flowchart shown in Fig. 6, following Step 106, checking of surrounding trees (Step 108), determination of the presence/absence of a vertical/horizontal relationship line (Step 110), and determination of a term to be registered (Step 112) are shown. Since these processes are substantially the same as the case of registering a node by the word search that will be described later, the description thereof is omitted here.

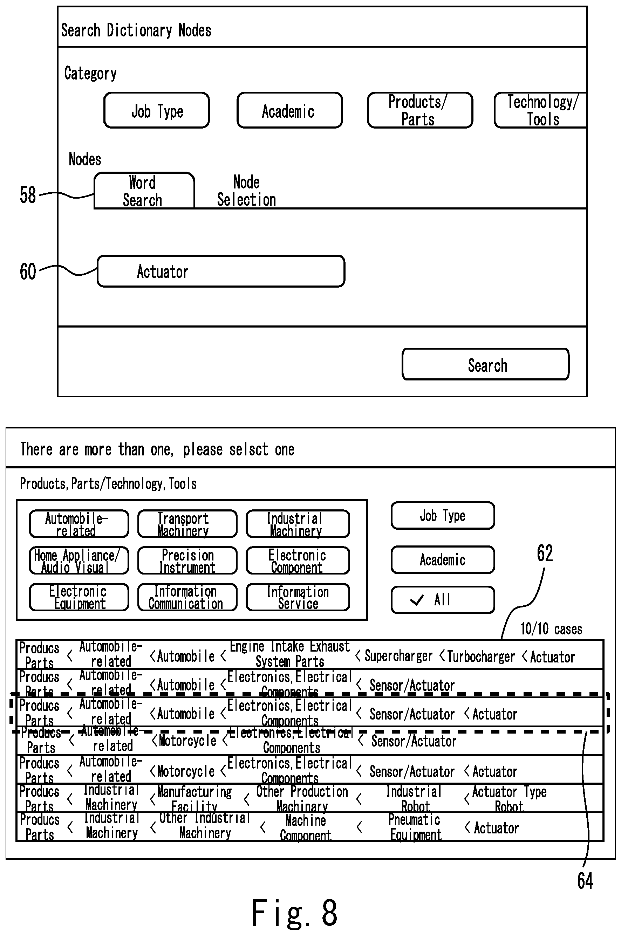

Fig. 8 shows an example of a screen displayed on the monitor of the operation terminal 14 when a dictionary node is registered by the word search method. Here, a case will be described in which product knowledge of "Actuator" is required as a skill necessary for "Design of Actuators for Small Outboard Motors".

In the upper part of Fig. 8, a tab of "Word Search" is selected to set the "Word Search" as a method of dictionary node search (58). Then, "Actuator" is input as a word to be searched (60).

The lower part of Fig. 8 shows a search result (62) of "Actuator". Here, specifically, seven results are shown from "Products/Parts" < "Automobile-related" < "Automobile" < "Engine Intake Exhaust System Parts" < "Supercharger" < "Turbocharger" < "Actuator" to "Products/Parts" < "Industrial Machinery" < "Other Industrial Machinery" < "Machine Component" < "Pneumatic Device" < "Actuator".

The above results show that the dictionary node of "Actuator" is not prepared in the field of ships, but is prepared in other fields. In this case, the person in charge of operation inquires of the requester whether there is any of the obtained results that can be used for the project of this. If an answer is received as a result, for example, that "Actuator" in the field of "Automobile" (64) can be used because "Actuator" has a multitude of knowledge in common, a dictionary node corresponding to this is registered.

The flowchart shown in Fig. 6 represents the above processing in Steps 104, Step 114, and Step 116. Specifically, the process of determining whether or not a dictionary node corresponding to "Actuator" in the "Ship" field in the results of the keyword search (62) corresponds to Step 104. In addition, when the determination is negative, the process of determining whether or not an available dictionary node exists in another field corresponds to Step 114. Then, the process of registering "Actuator" in the "Automobile" field corresponds to Step 116.

In the flowchart shown in Fig. 6, below Step 116 as well, as in the case of Step 106 described above, checking of surrounding trees (Step 108), determination of the presence/absence of a vertical/horizontal relationship line (Step 110), and determination of a term to be registered (Step 112) are shown.

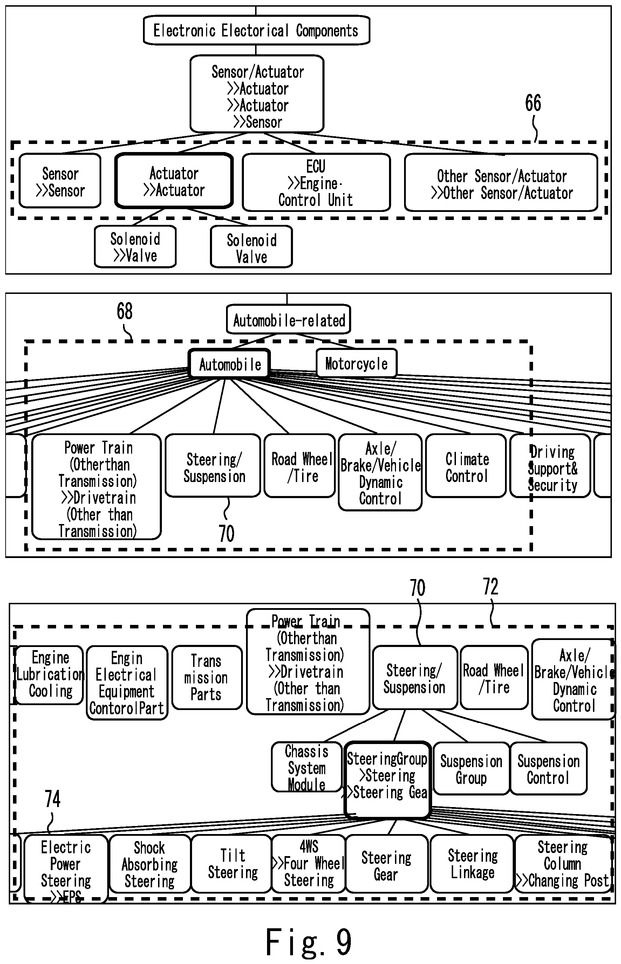

Fig. 9 shows an example of a screen displayed on the monitor of the operation terminal 14 in accordance with the processing of Steps 108 to 112. More specifically, the upper part of Fig. 9 shows the surrounding trees that the person in charge of operation displayed on the screen after registering the above "Actuator". The person in charge of operation shows this screen to the person in charge of recruitment in the company to confirm whether or not a useful node exists in the dictionary nodes (66) arranged along with "Actuator" below "Sensor/Actuator".

If a useful dictionary node is found among the dictionary nodes (66), the node is registered. In addition, if there is no useful node among them, the person in charge of operation may display surrounding dictionary nodes in a further wider range. The middle part of Fig. 9 shows an example in which dictionary nodes (68) arranged below "Automobile" are displayed on the screen after moving further to a superordinate side.

The person in charge of operation confirms the usefulness of the dictionary node (68) with the requester. As a result, for example, when the usefulness of "Steering" (70) is recognized, the dictionary nodes (72) below the "Steering" may be expanded further so as to confirm whether or not there is any necessary skill. The lower part of Fig. 9 shows an example in which dictionary nodes (72) extending below "Steering" (70) are displayed. Then, for example, if it is found that knowledge of "Electric Power Steering" (74) is necessary, the dictionary node thereof (74) is registered.

It should be noted that the surrounding trees are expanded by tracing only the vertical relationship lines in the above example, but the method of the expansion is not limited to this. For example, when a horizontal relationship line is linked to the registered dictionary node, the surrounding tree may be expanded by tracing the horizontal relationship line.

During the above processing, the act of displaying the upper, middle, or lower screen of Fig. 9 and the act of finding dictionary nodes (66), (68), or (72) linked by the vertical and/or horizontal relationship lines on the screen correspond to the processing of Step 108 and Step 110 in the flowchart shown in Fig. 6. In addition, the act of finding a term to be registered from the dictionary nodes (66), (68), and (72) corresponds to the processing of Step 112.

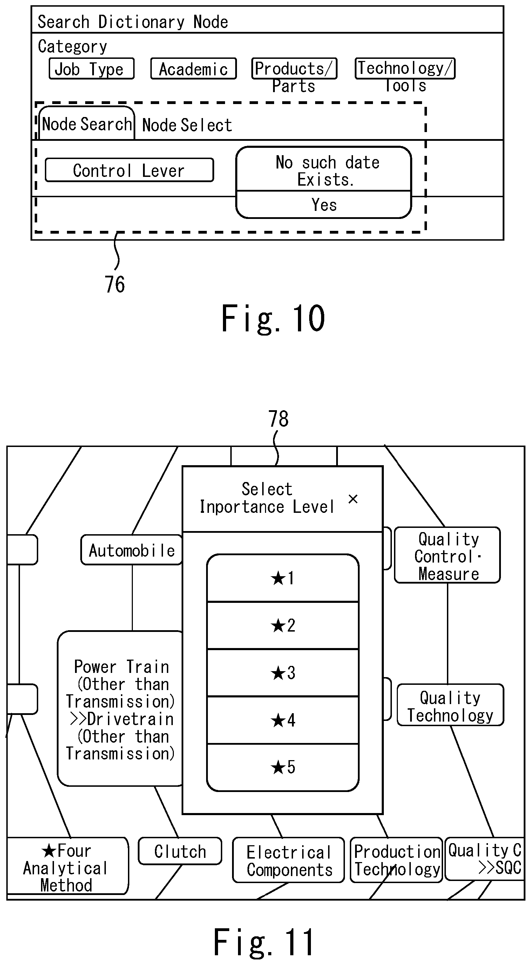

An item that is not registered in the matching dictionary may be required by the requester. Fig. 10 shows an example of a screen displayed on the monitor of the operation terminal 14 when "Control Lever" that is not included in the matching dictionary is required in the present case relating to "Design of Actuators for Small Outboard Motors".

Specifically, Fig. 10 displays a state in which "Control Lever" is input as a search word, and a comment "No corresponding data Exists." is shown as a search result (76). In this case, the person in charge of operation requests the management server 10 to add a dictionary node that corresponds to "Control Lever" using a chat function (not shown).

During the above processing, the act of searching for "Control Lever" and confirming the result corresponds to the processing of Step 102, Step 104 and Step 114 in the flowchart shown in Fig. 6. In addition, the act of requesting the management server 10 to add "Control Lever" corresponds to Step 118. As shown in Fig. 6, the processing described above is repeatedly performed until registration of all dictionary nodes that correspond to all the capabilities necessary for the project is completed (Step 120). Hereinafter, the dictionary node thus registered is referred to as a "desire node".

In the present embodiment, when a desire node is registered, the importance level of the node can be selected. Fig. 11 shows a state in which a display of "Select Importance Level" (78) is popped up on the monitor of the operation terminal 14. Here, an example in which the importance level can be selected in five levels is shown. Each importance level can be defined, for example, as follows:

 5: Indispensable

4: Important
3: Necessary
2: Helpful
1: Possibly helpful

Information on the existing human resources belonging to the organization that executes the project can be registered by the operation terminal 14 in substantially the same procedure as the one described above. More specifically, dictionary nodes that correspond to the capabilities possessed by existing human resources can be registered for each human resource by the operation terminal 14. For example, the person in charge of operation may conduct an interview with the requester and performs this registration based on the result. In addition, the person in charge of operation may perform the above registration based on a resume, a CV, or the like of the existing human resource received from the requester. Hereinafter, the dictionary node thus registered is referred to as a "possession node". In the present embodiment, when a possession node is registered, a "mastery level" of the possession node may be registered as additional information in the same manner as "the importance level" of the desire node.

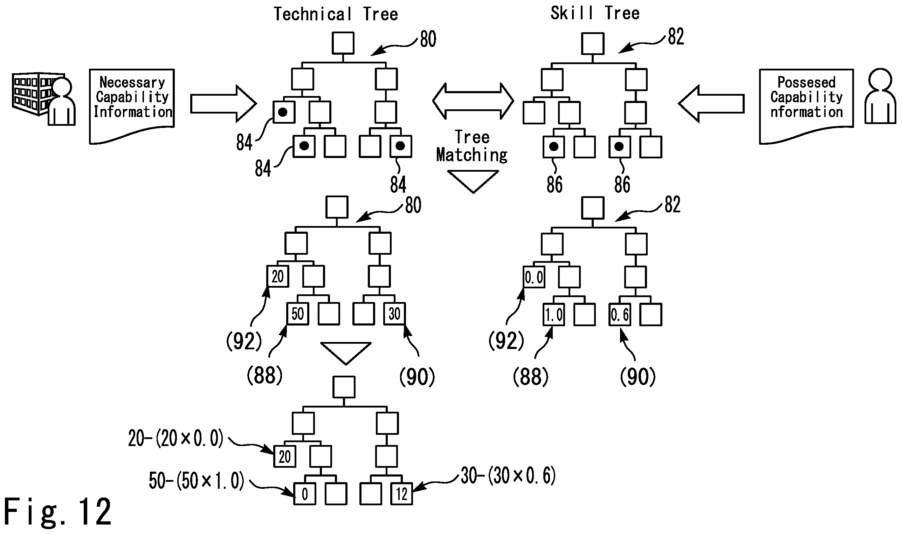

Fig. 12 is a diagram for describing a method of calculating a deficiency score by comparing a technical tree 80 and a skill tree 82. The technical tree 80 is configured by applying desire nodes 84 registered based on the necessary capability condition to the tree structure of the matching dictionary. On the other hand, the skill tree 82 is configured by applying possession nodes 86 registered based on the capability possessed by the existing human resource to the tree structure of the matching dictionary.

In the example shown in Fig. 12, three desire nodes 84 are registered in the technical tree 80. Any one of these desire nodes 84 is registered together with the importance level thereof. An allocated point is allocated to each desire node 84 according to its importance level. The technical trees 80 shown in the middle part of Fig. 12 shows an example in which a perfect score is 100 points, and allocated points of 20, 50, and 30 points are respectively given to the desire nodes 84 having the importance levels 2, 5, and 3.

It should be noted that the location of the node in the hierarchy in the technical tree 80 may be reflected in the point allocated to each desire node 84. Specifically, for example, weighting according to the hierarchy may be performed such that a higher allocated point is given to a further superordinate desire node 84. Alternatively, the weighting may be set such that an allocated point of a further subordinate desire node 84 becomes larger.

In the course of calculating the deficiency score, next, the distance between each of the desire nodes 84 included in the technical tree 80 and each of the possession nodes 86 included in the skill tree 82 is measured. Further, based on the result of the measurement, a coefficient with respect to an allocated point given to each of the desire nodes 84 is determined.

The skill tree 82 shown in the middle part of Fig. 12 shows an example of coefficients with respect to the allocated points set by the above processing. Here, first, for each of the desire nodes 84, it is determined whether the possession node 86 exists at a position of full matching in the tree structure. If the possession node 86 of full matching exists, a coefficient of 1.0 is given to the allocated point of the desire node 84 (see a reference sign 88).

Next, it is determined whether or not the possession node 86 exists at a location linked to the corresponding position of the desire node 84 by a vertical relationship line without mediation of the hierarchy. In other words, it is determined whether or not a possession node 86 having a sibling relationship in which the superordinate node of the dependent source is the same. If the possession node 86 of this type exists, a coefficient of 0.6 is given to the allocated point of the desire node 84 (see a reference sign 90).

Further, it is determined whether or not the possession node 86 exists at a location linked to the corresponding position of the desire node 84 by a vertical relationship line via the hierarchy, or at a location linked to the corresponding position by a horizontal relationship line (see Figs. 4 and 5). If the possession node 86 of this type exists, a coefficient of 0.2 is given to the allocated point of the desire node 84 (not shown).

Then, a coefficient of 0.0 is given to the allocated point of the desire node 84 for which the possession node 86 that satisfies the above relationships does not exist (see a reference sign 92).

After the above processing ends, next, the deficiency score for each of the desire nodes is calculated by the following arithmetic expression:

$$\text{Deficiency score} = (\text{allocated point}) - (\text{sufficiency score})$$

In the expression,

$$\text{Satisfaction score} = (\text{allocated point} \times \text{coefficient})$$

The "sufficiency score" shown in the above expression is a numerical value indicating how much each desire node is satisfied by the possession node. As described above, by multiplying the "allocated point", in which the importance level is reflected, by the "coefficient", in which the strength of the relationship with the possession node is reflected, the "sufficiency score" according to the actual situation can be obtained. Then, by subtracting the "sufficiency score" from the "allocated point", a numerical value that accurately represents how much each of the desire nodes are deficient can be calculated as the "deficiency score".

The lower part of Fig. 12 illustrates a calculation example of the sufficiency score and the deficiency score. For example, for a desire node to which an allocated point of "20 points" is given, the coefficient is "0.0". Therefore, the sufficiency score is (20 $\times$ 0.0), and the deficiency score is 20 - (20 $\times$ 0.0) = 20. For a desire node to which an allocated point of "50 points" is given, the coefficient is "1.0". Therefore, the sufficiency score is 50 and the deficiency score is 0. In addition, for the desire node to which an allocated point of "30 points" is given, the coefficient is "0.6". Therefore, the sufficiency score is 18 and the deficiency score is 12.

According to the above method, the deficiency score of a desire node having a possession node with a strong relationship has a small value. If there is a possession node with a strong relationship, it can be determined that the requirement for the desire node is satisfied to a large degree. The above-described deficiency score appropriately represents that situation.

Further, according to the method described above, if the strength of the relationship with the possession node is equal, the higher the allocated point is, the larger value the deficiency score of the desire node has. In other words, the deficiency score of the desire node having a higher importance level is likely to be calculated to have a larger value than that of the desire node having a lower importance level. In this manner, according to the method of the present embodiment, the importance level of the desire node can also be appropriately reflected in the deficiency score.

It should be noted that in the above example, the coefficients according to the distance are given to the three cases of full matching, no mediation, and mediation or the horizontal relationship line, but the method of imparting coefficients is not limited to this. The distance between the desire node and the possession node may be classified more finely, and more types of coefficients may be introduced.

In addition, in the above example, the mastery level of the possession node 86 is not reflected in the deficiency score. However, a coefficient according to the mastery level may be introduced to reflect the mastery level in the deficiency score. In this case, a coefficient closer to 1.0 is set for a possession node having a higher mastery level, and a coefficient closer to 0.0 is set for a possession node having a lower mastery level. Then, by multiplying those coefficients by the allocated points related to the respective possession nodes, the mastery levels can be reflected in the sufficiency scores and deficiency scores.

In the above method, information on the capability condition of the organization and information on the capability possessed by the existing human resource are combined into a technical tree and a skill tree having the same tree structure with each other. For this reason, according to the present method, it is possible to determine whether or not the desire node and the possession node are matched by a simple comparison without requiring complicated natural language processing or the like. Further, according to the above method, not only full matching between the desire node and the possession node but also the relevance between the two can be reflected in the deficiency score. For this reason, according to the present method, it is possible to obtain a deficiency score of the possessed capability with respect to the capability condition with easy processing.

[Operation Specific to First Embodiment]

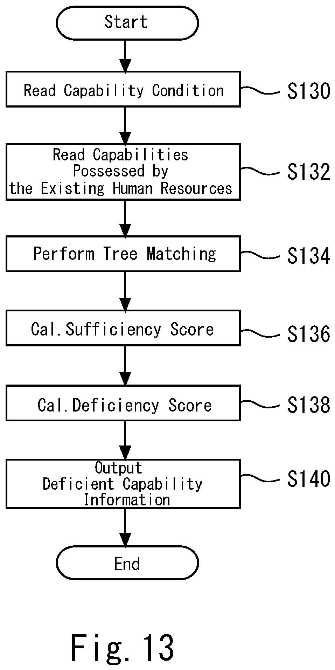

Next, an operation performed by the management server 10 in the present embodiment will be described with reference to Fig. 13. In the present embodiment, a case will be described in which extraction of deficient capability information as of now is requested as a precondition for creating recruitment information by a company that desires to replenish a human resource for a specific organization.

Fig. 13 is a flowchart for describing a flow of the processing performed by the management server 10 in the present embodiment. Here, it is assumed that prior to the execution of a routine shown in Fig. 13, registration of a desire node corresponding to the capability condition and registration of a possession node of the existing human resource have been completed by the methods described with reference to Figs. 6 to 11.

The routine shown in Fig. 13 is started by a request being made to the management server 10 for extraction of the deficient capability information. When this routine is started, following an initialization process, the capability condition of the organization is first read (Step 130). More specifically, all the desire nodes registered based on the capability condition are read, and a technical tree including them is generated.

Next, the capabilities possessed by the existing human resources are read (Step 132). Specifically, the possession nodes registered for the existing human resources belonging to the organization are read. When reading of the possession nodes is completed for all the existing human resources, a skill tree including all of them are generated.

Next, tree matching is performed by the method described with reference to Fig. 12 (Step 134). Specifically, in the present step, the following processing is performed:

> 1. The allocated points of the respective desire nodes are calculated based on the respective importance levels so that the total of the allocated points given to all the desire nodes is a perfect score (for example, 100 points).
>
> 2. The technical tree and the skill tree are compared with each other, and coefficients for the allocated points given to the respective desire nodes based on the distances between the desire nodes and the possession nodes are calculated.

Next, the sufficiency scores are calculated for all the desire nodes included in the technical tree (Step 136). Specifically, for each desire node, the arithmetic operation of (score × coefficient) is performed, and the result is stored as the sufficiency score.

After the sufficiency scores are calculated for all the desire nodes, a deficiency score is calculated for each of the desire nodes (Step 138). Specifically, for each desire node, the arithmetic operation of (allocated point - sufficiency score) is performed, and the result is stored as the deficiency score.

Finally, information including the desire nodes included in the technical tree and the deficiency scores calculated for the respective desire nodes is output as the deficient capability information (Step 140).

According to the above processing, it is possible to extract the difference between the capability necessary for the organization and the capability possessed by the existing human resource as an objective deficient capability. Therefore, if the recruitment information for a human resource to be replenished is created based on the deficient capability, it is possible to efficiently recruit a human resource who can supplement the deficient capability. For this reason, the deficient capability extraction device of the present embodiment can achieve an effect of significantly reducing the workload relating to the replenishment of a human resource.

Now, in the first embodiment described above, the extracted deficient capability information is used as a basis of the recruitment information, but the method of using the deficient capability information is not limited to this. For example, the deficient capability information may be used as a basis for a training program for the existing human resource. In this case, by educating the existing human resource, the deficient capability can be efficiently supplemented.

It should be noted that in the first embodiment described above, the element allocated to the dictionary node corresponds to the "matching element" in the first aspect of the disclosure. In addition, the existing human resource belonging to the organization corresponds to the "target human resource" in the first aspect of the disclosure.

[Second Embodiment]

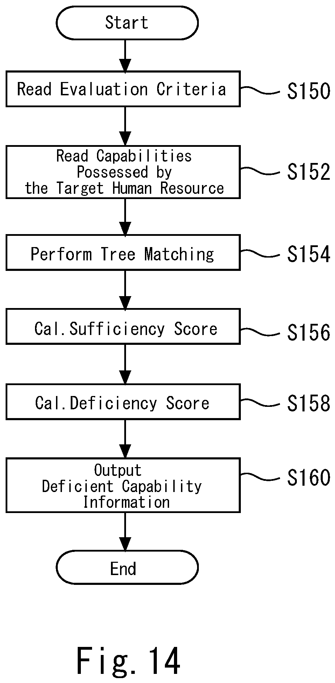

Next, a second embodiment of the present disclosure will be described with reference to Fig. 14. The deficient capability extraction device of the present embodiment can be implemented with the hardware configuration shown in Fig. 1 as in the case of the first embodiment. In the present embodiment, a description will be given of a case in which the deficient capability information of a human resource is extracted as a precondition for training the human resource.

In the first embodiment described above, the desire node is registered based on the condition of the capability necessary for the specific organization, and the possession node is registered based on the capability possessed by the existing human resource of the organization. In the present embodiment, the possession node is registered based on the capability possessed by the human resource who is a target of personnel evaluation, and the desire node is registered based on an evaluation item to be applied to the human resource.

Fig. 14 is a flowchart for describing a flow of the processing performed by the management server 10 in the present embodiment. As in the case of the first embodiment, it is assumed that prior to the execution of a routine shown in Fig. 14, registration of the desire node based on the evaluation item and registration of the possession node of the target human resource have been completed.

When the routine shown in Fig. 14 is started, following an initialization process, evaluation criteria are first read (Step 150). Specifically, all the desire nodes registered corresponding to the respective items included in the evaluation criteria are read, and a technical tree including them is generated.

Next, the capability possessed by the target human resource is read (Step 152). Specifically, all the possession nodes registered based on the experience, performance, and the like of the target human resource are read, and a skill tree including them is generated.

Hereinafter, based on the technical tree and the skill tree generated in the present routine, processing from the execution of the tree matching (Step 154) to the output of the deficient capability information (Step 160) is sequentially executed. As a result, the deficient capability information indicating the capability that is deficient for the target human resource indicated by way of a combination of the desire node and the deficiency score is output.

If a training program for the target human resource is created by using such deficient capability information, it is possible to efficiently develop the deficient capability of the target human resource. For this reason, according to the present embodiment, it is possible not only to efficiently train the target human resource but also to significantly reduce the workload for the training.

Now, in the first and second embodiments described above, the management server 10 and the operation terminals 14 are connected via the network 12, but the configuration of the present disclosure is not limited to this. For example, the function of the operation terminal 14 may be provided in the management server 10, and the management server 10 alone may be used to implement the deficient capability extraction device.

In addition, in the first and second embodiments described above, matching items to be allocated to the respective dictionary nodes are items mainly related to capabilities, such as a skill, experience, and educational background, but the content of the matching items is not limited to these. For example, items related to an attitude towards the work, a daily behavioral pattern, and results of the work may be included in the matching items.

**Description of Reference Numerals**

10 management server
14 operation terminal
36 matching dictionary
38 dictionary node
40, 42, 44 horizontal relationship line
80 technical tree
82 skill tree
84 desire node
86 possession node

**Claims**

1. A deficient capability extraction device, comprising:

a memory unit for storing a matching dictionary which has a tree structure including a plurality of dictionary nodes hierarchized in terms of at least one type of relationship from among a superordinate-subordinate relationship of an article concept, a relationship between a whole and a part of an article, and a superordinate-subordinate relationship of an abstract concept, and in which a matching element is allocated to each dictionary node;
an input interface for receiving an input of a dictionary node to be registered; and
a processing device for extracting deficient capability information based on the matching dictionary and the registered dictionary node; wherein
the processing device performs:

a process of registering a dictionary node in the matching dictionary as a desire node, said dictionary node being required for a human resource;
a process of applying the desire node to the tree structure to generate a technical tree that covers the registered desire node;
a process of registering a dictionary node in the matching dictionary as a possession node, said dictionary node being possessed by a target human resource;
a process of applying the possession node to the tree structure to generate a skill tree that covers the registered possession node; and
a process of generating the deficient capability information based on a result obtained by subtracting a group of the possession nodes included in the skill tree from a group of the desire nodes included in the technical tree.

2. The deficient capability extraction device according to claim 1, wherein
the input interface has a function of receiving an input of an importance level of the desire node, and
the process of extracting the deficient capability information includes:

a process of calculating an allocated point of the desire node such that the higher the importance level of the desire node is, the larger a value of the allocated point is;
a process of setting a coefficient of the desire node such that the shorter a distance of the desire node from the possession node in the tree structure is, the larger a value of the coefficient is;

a process of calculating a sufficiency score of the desire node based on the allocated point and the coefficient;

a process of calculating a deficiency score of the desire node by subtracting the sufficiency score from the allocated point; and

a process of generating, as the deficient capability information, information including a combination of the deficiency score and the desire node corresponding to the deficiency score.

3. The deficient capability extraction device according to claim 2, wherein:

the matching dictionary further includes information indicating at least one type of horizontal relationship from among a horizontal relationship that associates one matching element with another matching element used to handle the one matching element, a horizontal relationship that associates one matching element with another matching element required to handle the one matching element, and a horizontal relationship that associates one matching element with another matching element similar to the one matching element, and

the process of setting the coefficient includes a process of setting a coefficient that corresponds to the horizontal relationship of the desire node when the horizontal relationship is established between the desire node and the possession node.

4. The deficient capability extraction device according to claim 2 or 3, wherein:

the input interface has a function of receiving an input of a mastery level of the possession node, and

the process of calculating the sufficiency score calculates the sufficiency score based on the allocated point, the coefficient, and the mastery level of the possession node related to the coefficient.

5. The deficient capability extraction device according to any one of claims 1 to 4, wherein

the group of the desire nodes corresponds to a sum of capabilities required for a specific organization,

the target human resource is each of existing human resources belonging to the organization,

the group of the possession nodes corresponds to a sum of possession nodes of all the existing human resources belonging to the organization, and

the deficient capability information is information that is deficient for the organization.

6. The deficient capability extraction device according to any one of claims 1 to 4, wherein

the target human resource is a human resource that is a target of performance evaluation,

the group of the desire nodes corresponds to a sum of individual elements included in evaluation criteria to be applied to the target human resource,

the group of the possession nodes corresponds to a sum of individual elements possessed by the target human resource, and

the deficient capability information is information on a capability that is deficient for the target human resource in light of the evaluation criteria.

Fig. 1

Fig. 2

Fig. 3

Fig. 4

Fig. 5

Fig. 6

| Engineering Department ● ● ● ● | | Score Ranking | |
|---|---|---|---|
| JOB NO | | 10225310 | |
| Employmemt Reriod | 2017/01/01 ▽ | ~ | 2017/03/31 |
| Content of Job | | Design of Actuators for Small Outboard Motors | |

~ 46

**Search Dictionary Nodes**

カテゴリ

48 ── [ ✓Job Type ]  [ Academic ]

Nodes

|  | Word Search | Node Selection | ── 50 |

| Planning/ Research | CAE Analysis | ── 54 |
|---|---|---|
| Design/ Development | Verification | |
| Experiment/ Evaliation | Software Development | |
| Production Technology | Construction/ Plant Design | |
| Production | Shipbuilding Design | ── 56 |
| Production Management | Formulation Design | |

52 ──

**Fig. 7**

**Search Dictionary Nodes**

Category

| Job Type | Academic | Products/ Parts | Technology/ Tools |

Nodes

58 — [ Word Search ] Node Selection

60 — [ Actuator ]

[ Search ]

---

There are more than one, please selsct one

Products, Parts/Technology, Tools

| Automobile- related | Transport Machinery | Industrial Machinery |
| Home Appliance/ Audio Visual | Precision Instrument | Electronic Component |
| Electronic Equipment | Information Communication | Information Service |

[ Job Type ]

[ Academic ]

[ ✓ All ]

62

10/10 cases

| Producs Parts | < Automobile- related | < Automobile | < Engine Intake Exhaust System Parts | < Supercharger < Turbocharger < Actuator |
| Producs Parts | < Automobile- related | < Automobile | < Electronics, Electrical Components | < Sensor/Actuator |
| Producs Parts | < Automobile- related | < Automobile | < Electronics, Electrical Components | < Sensor/Actuator < Actuator |
| Producs Parts | < Automobile- related | < Motorcycle | < Electronics, Electrical Components | < Sensor/Actuator |
| Producs Parts | < Automobile- related | < Motorcycle | < Electronics, Electrical Components | < Sensor/Actuator < Actuator |
| Producs Parts | < Industrial Machinery | < Manufacturing Facility | < Other Production Machinary | < Industrial Robot < Actuator Type Robot |
| Producs Parts | < Industrial Machinery | < Other Industrial Machinery | < Machine Component | < Pneumatic Equipment < Actuator |

64

# Fig. 8

Electronic Electorical Components

Sensor/Actuator
>>Actuator
>>Actuator
>>Sensor

66

Sensor
>>Sensor

Actuator
>>Actuator

ECU
>>Engine·
Control Unit

Other Sensor/Actuator
>>Other Sensor/Actuator

Solenoid
>>Valve

Solenoid
Valve

---

68

Automobile-related

Automobile        Motorcycle

Power Train
(Otherthan
Transmission)
>>Drivetrain
(Other than
Transmission)

Steering/
Suspension

Road Wheel
/Tire

Axle/
Brake/Vehicle
Dynamic
Control

Climate
Control

Driving
Support&
Security

70

---

70        72

Engine
Lubrication
Cooling

Engin
Electrical
Equipment
ContorolPart

Trans
mission
Parts

Power Train
(Otherthan
Transmission)
>>Drivetrain
(Other than
Transmission)

Steering/
Suspension

Road Wheel
/Tire

Axle/
Brake/Vehicl
Dynamic
Control

Chassis
System
Module

SteeringGroup
>Steering
>Steering Gea

Suspension
Group

Suspension
Control

74

Electric
Power
Steering
>>EPS

Shock
Absorbing
Steering

Tilt
Steering

4WS
>>Four Wheel
Steering

Steering
Gear

Steering
Linkage

Steering
Column
>>Changing Post

# Fig. 9

Search Dictionary Node

Category

Job Type    Academic    Products/    Technology/
                        Parts       Tools

Node Search | Node Select

Control Lever    No such date
                 Exists.

                 Yes

76

Fig. 10

78

Select
Inportance Level    ×

Automobile

★1

★2

Power Train
(Other than
Transmission)
>>Drivetrain
(Other than
Transmission)    ★3

★4

★5

Quality
Control·
Measure

Quality
Technology

★Four
Analytical
Method    Clutch    Electrical
                     Components    Production
                                    Technology    Quality C
                                                  >>SQC

Fig. 11

Fig. 12

Start

Read Capability Condition — S130

Read Capabilities
Possessed by
the Existing Human Resources — S132

Perform Tree Matching — S134

Cal.Sufficiency Score — S136

Cal.Deficiency Score — S138

Output
Deficient Capability
Information — S140

End

Fig. 13

Start

Read Evaluation Criteria — S150

Read Capabilities
Possessed by
the Target Human Resource — S152

Perform Tree Matching — S154

Cal.Sufficiency Score — S156

Cal.Deficiency Score — S158

Output
Deficient Capability
Information — S160

End

Fig. 14

## INTERNATIONAL SEARCH REPORT

| International application No. |
| --- |
| PCT/JP2018/024041 |

**A. CLASSIFICATION OF SUBJECT MATTER**
Int.Cl. G06Q10/06(2012.01)i

According to International Patent Classification (IPC) or to both national classification and IPC

**B. FIELDS SEARCHED**

Minimum documentation searched (classification system followed by classification symbols)
Int.Cl. G06Q10/00-99/00

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2004-240925 A (ARGO INTELLIGENT SERVICE KK) 26 August 2004, paragraphs [0008]-[0064], fig. 4-5 (Family: none) | 1, 6<br>2-5 |
| Y | 「フォーラムエンジニアリング+IBM」, [online], 日本アイ・ビー・エム株式会社, March 2018, [retrieval date 10 September 2018], internet:<URL:https://public.dhe.ibm.com/common/ssi/ecm/14/ja/14014614jpja/hybrid-cloud-case-study-14014614jpja-20180323.pdf>, pp. 1-3, non-official translation ("Forum Engineering+IBM", IBM JAPAN LTD.) | 1, 5-6 |

☒ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 11 September 2018 (11.09.2018) | 25 September 2018 (25.09.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

| International application No. |
|---|
| PCT/JP2018/024041 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2013-200706 A (HITACHI INFORMATION & TELECOMMUNICATION ENGINEERING LTD.) 03 October 2013, paragraphs [0057]-[0069], fig. 13-14 (Family: none) | 1, 5 |
| A | 多田和市, スマホに話せば最適な技術者を紹介 Watson 使って大手人材派遣会社が開発へ，　日経ビッグデータ, 10 May 2016, no. 27, pp. 16-17, non-official translation (TADA, Waichi, When speaking to smartphone, best technicians are introduced – Agency for hiring out workers to large company is involved in development using Watson, Nikkei Big data) | 1-6 |
| A | JP 2007-241673 A (THE CHUGOKU ELECTRIC POWER CO., INC.) 20 September 2007, paragraphs [0010]-[0011] (Family: none) | 1-6 |

Form PCT/ISA/210 (continuation of second sheet) (January 2015)

**EP 3 812 984 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003162651 A